# EUROPÄISCHE PATENTANMELDUNG

(11) **EP 1 362 657 A1**
(43) Veröffentlichungstag der Anmeldung: **19.11.2003**
(21) Anmeldenummer: 03010343.6
(22) Anmeldetag: 08.05.2003
(51) Int. Cl.: B23D 47/02, B27B 5/065

(54) **Vorrichtung zum Bearbeiten plattenförmiger Werkstücke**

(30) Priorität: 15.05.2002 DE 10223143
(71) Anmelder: REICH SPEZIALMASCHINEN GmbH, 72622 Nürtingen (DE)
(72) Erfinder: Hackl, Franz, 4591 Molln (AT); Stumpf, Volker, 82131 Gauting (DE)
(74) Vertreter: Hoeger, Stellrecht & Partner

(57) **Zusammenfassung**

Die Erfindung betrifft eine Vorrichtung (1) zum Bearbeiten vorzugsweise plattenförmiger Werkstücke, insbesondere Plattenaufteilsäge, mit einem einen Auflagetisch (6) für die Werkstücke ausbildenden Maschinengestell (4) und mit einer in einer Bearbeitungsrichtung linear verfahrbaren Bearbeitungseinheit (10) sowie mit mindestens einer Auflagevorrichtung (94) mit einem seitlich vom Maschinengestell (4) abstehenden Auflageelement (60) zur Auflage eines Werkstückes und mit einem das Auflageelement (60) abstützenden Stützelement (62). Um die Vorrichtung (1) bedienerfreundlicher zu gestalten, wird erfindungsgemäß vorgeschlagen, daß das Auflageelement (60) in einem vom Maschinengestell (4) beabstandeten Bereich mittels des Stützelementes (62) am Maschinengestell (4) abgestützt ist.

## Beschreibung

Die Erfindung betrifft eine Vorrichtung zum Bearbeiten vorzugsweise plattenförmiger Werkstücke, insbesondere Plattenaufteilsäge, mit einem einen Auflagetisch für die Werkstücke ausbildenden Maschinengestell und mit einer in einer Bearbeitungsrichtung linear verfahrbaren Bearbeitungseinheit sowie mit mindestens einer Auflagevorrichtung mit einem seitlich vom Maschinengestell abstehenden Auflageelement zur Auflage eines Werkstückes und mit einem das Auflageelement abstützenden Stützelement.

Derartige Vorrichtungen sind aus dem Stand der Technik bekannt. Mit ihrer Hilfe können Werkstücke, insbesondere Holz- oder Kunststoffplatten, bearbeitet werden. Die Vornahme eines Bearbeitungsschrittes erfolgt mittels einer Bearbeitungseinheit, die entlang einer Bearbeitungsrichtung linear verfahrbar ist. Nach erfolgtem Bearbeitungsschritt wird das bearbeitete Werkstück vom Auflagetisch auf die Auflageelemente der seitlich am Maschinengestell angeordneten Auflagevorrichtungen übernommen, von wo aus es zur Vornahme weiterer Bearbeitungsschritte auf dem Auflagetisch neu positioniert wird oder auf denen es bis zum Abtransport zwischengelagert wird.

Die Auflageelemente der aus dem Stand der Technik bekannten Vorrichtungen zur Bearbeitung vorzugsweise plattenförmiger Werkstücke werden an ihren Außenbereichen mittels vertikal ausgerichteter Stützelemente bodenseitig abgestützt. Die Stützelemente bilden hierbei für einen Bediener der Vorrichtung häufig ein Hindernis und erhöhen die Unfallgefahr.

Der Erfindung liegt die Aufgabe zugrunde, eine Vorrichtung der eingangs genannten Art bedienerfreundlicher zu gestalten.

Diese Aufgabe wird bei einer Vorrichtung der gattungsgemäßen Art erfindungsgemäß dadurch gelöst, daß das Auflageelement in einem vom Maschinengestell beabstandeten Bereich mittels des Stützelementes am Maschinengestell abgestützt ist.

Die erfindungsgemäße Vorrichtung gewährt einem Bediener ein höheres Maß an Bewegungsfreiheit und verringert außerdem die Unfallgefahr. Darüber hinaus hat die erfindungsgemäße Vorrichtung den Vorteil, daß für das sich am Maschinengestell abstützende Stützelement kein gesondertes Fundament am Aufstandsboden gelegt werden muß.

Vorteilhafterweise verjüngt sich das Stützelement in Richtung des Maschinengestells. Eine derartige Ausführungsform gewährt dem Bediener eine größere Beinfreiheit und vermindert dadurch die Unfallgefahr.

Bei einer bevorzugten Ausführungsform der erfindungsgemäßen Vorrichtung ist die Auflagevorrichtung entlang einer Seite des Maschinengestells verstellbar gehalten. Dies gibt einem Bediener die Möglichkeit, die Auflagevorrichtung entsprechend seiner individuellen Bedürfnisse, des vorzunehmenden Bearbeitungsschrittes oder den Abmessungen des aufzulegenden Werkstückes entsprechend am Maschinengestell zu positionieren. Dazu ist das Auflageelement günstigerweise über eine Linearführungsanordnung verstellbar am Maschinengestell gehalten. Dies ermöglicht eine sehr exakte Führung des gegenüber dem Maschinengestell verstellbaren Auflageelementes. Eine besonders kostengünstige Linearführungsanordnung kann mittels einer am Maschinengestell angeordneten Führungsnut erzielt werden, in die eine am Auflageelement angeordnete Leiste eingreift, die das Auflageelement abstützt.

Bei einer besonders bevorzugten Ausführungsform der erfindungsgemäßen Vorrichtung ist am Maschinengestell auf der der Auflagevorrichtung zugewandten Seite ein Querträger angeordnet, an welchem sich das Stützelement am Maschinengestell abstützt. Der Querträger bildet eine Abstützfläche für das Stützelement am Maschinengestell aus und erhöht darüber hinaus die Stabilität des Maschinengestells.

Vorteilhafterweise umfaßt die erfindungsgemäße Vorrichtung ein Feststellelement zum Festlegen der Auflagevorrichtung in einer eingestellten Position. Damit läßt sich ein unbeabsichtigtes Verstellen der Auflagevorrichtung vermeiden.

Bei einer bevorzugten Ausführungsform der erfindungsgemäßen Vorrichtung umfaßt das Auflageelement einen an ein Gebläse anschließbaren Strömungskanal und es weist im Bereich seiner Auflagefläche Bohrungen für einen Luftdurchtritt auf. Die durch die Bohrungen austretende Luftströmung erzeugt ein Luftpolster zwischen den Werkstücken und dem Auflageelement, so daß die Werkstücke auf dem Auflageelement mit geringem Kraftaufwand verschoben werden können. In diesem Zusammenhang kann es vorgesehen sein, daß die Luftzufuhr zum Auflageelement über das Stützelement erfolgt, das hierzu einen Strömungskanal ausbildet, so daß auf der Bedienerseite der Vorrichtung auf eine Verlegung freiliegender Luftzuleitungen zum Auflageelement verzichtet werden kann.

Günstigerweise umfaßt die erfindungsgemäße Vorrichtung eine Justiereinrichtung zur horizontalen Ausrichtung des Auflageelements. Über eine derartige Einrichtung läßt sich eine parallele Ausrichtung des Auflageelementes mit der Auflagefläche des Auflagetisches vornehmen.

Um an einer erfindungsgemäßen Vorrichtung Bearbeitungsschritte vorzunehmen, für die ein Durchtritt eines Bearbeitungswerkzeuges durch den Auflagetisch notwendig ist, wie beispielsweise Sägeschnitte, kann es vorgesehen sein, daß der Auflagetisch einen zur Bewegungsrichtung der linear verfahrbaren Bearbeitungseinheit parallel verlaufenden Spalt aufweist.

Die erfindungsgemäße Vorrichtung ermöglicht es, die Auflagevorrichtung einschließlich der auf ihr aufliegenden Werkstücke lediglich am Maschinengestell abzustützen. Um zu vermeiden, daß die dabei auf das Maschinengestell einwirkenden Kräfte Relativbewegungen der einzelnen Baugruppen des Maschinengestells und sich daran anschließender Maschinenteile zueinander bewirken, woraus eine unpräzise Bearbeitung der Werkstücke resultieren könnte, umfaßt das Maschinengestell einer bevorzugten Ausführungsform der erfindungsgemäßen Vorrichtung mindestens ein parallel zum Spalt verlaufendes Hohlprofil, welches wenigstens einen Teil der Auflagefläche des Auflagetisches ausbildet.

Eine besonders große Querstabilität kann dadurch erzielt werden, daß wenigstens ein Teil der Auflagefläche des Auflagetisches durch zwei in Längsrichtung parallel zueinander verlaufende, zwischen sich den Spalt ausbildende Hohlprofile ausgebildet ist.

Von Vorteil ist es, wenn die Hohlprofile jeweils durch zwei L-förmig gebogene Profilteile gebildet sind, da dadurch dem Maschinengestell eine besonders hohe Stabilität verliehen werden kann.

Günstigerweise bilden die L-förmig gebogenen Profilteile an zwei sich diagonal gegenüberliegenden Eckpunkten des Hohlprofils jeweils einen Überstand aus, wobei sich die Überstände in entgegengesetzte Richtungen erstrecken. An einem Überstand kann gegebenenfalls eine Führungsanordnung, beispielsweise für ein Auflageelement, angeordnet sein, während der andere Überstand eine Längsbegrenzung des Spaltes ausbildet.

Vorteilhafterweise umfaßt das Maschinengestell der erfindungsgemäßen Vorrichtung mindestens ein zum Spalt parallel verlaufendes Hohlträgerprofil, welches sich an die zur Auflagefläche des Auflagetisches abgewandte Unterseite des Hohlprofils anschließt und bevorzugt U-förmig ausgebildet ist. Dadurch wird die Steifigkeit des Maschinengestells zusätzlich erhöht.

Um die durch den Spalt voneinander getrennten Bereiche des Auflagetisches starr miteinander zu verbinden, umfaßt eine bevorzugte Ausführungsform der erfindungsgemäßen Vorrichtung mindestens ein den Spalt überbrückendes Brückenelement, welches günstigerweise quer zum Spalt ausgerichtet auf der Oberseite des Auflagetisches angeordnet ist. Dadurch wird gewährleistet, das selbst unter großen einseitigen oder punktuellen Belastungen des Auflagetisches die durch den Spalt getrennten Bereiche des Auflagetisches sich relativ zueinander im wesentlichen nicht bewegen.

Bei einer vorteilhaften Ausführungsform sind am Maschinengestell zu beiden Seiten des Spaltes parallel zu diesem verlaufende Führungsanordnungen zur Führung der Bearbeitungseinheit vorgesehen, wobei als Führungsanordnungen insbesondere Prismenführungen zum Einsatz kommen. Diese ermöglichen eine exakte Führung der Bearbeitungseinheit und dementsprechend eine präzise Bearbeitung der Werkstücke.

Die nachfolgende Beschreibung einer bevorzugten Ausführungsform der Erfindung dient im Zusammenhang mit der Zeichnung der näheren Erläuterung. Es zeigen:
- Figur 1:: eine schaubildliche Darstellung einer erfindungsgemäßen Vorrichtung;
- Figur 2:: eine Teilschnittansicht der Vorrichtung längs der Linie I-I in Figur 1;

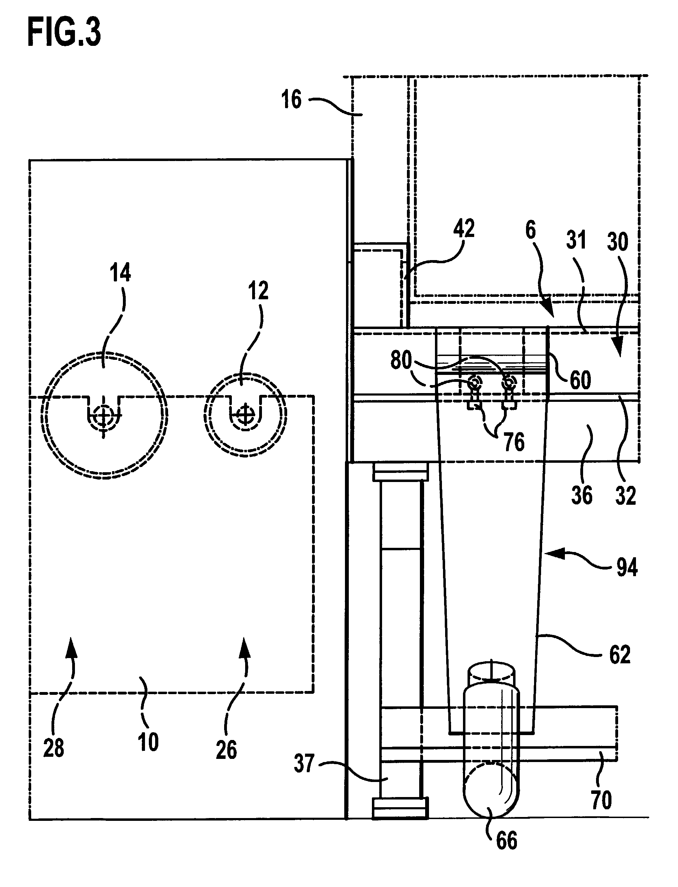

- Figur 3:: eine ausschnittsweise Vorderansicht auf die Vorrichtung gemäß Figur 1; und
- Figur 4:: eine vergrößerte Darstellung des Teilbereiches A aus Figur 2.

In der Zeichnung ist eine erfindungsgemäße Vorrichtung in Form einer insgesamt mit dem Bezugszeichen 1 belegten Druckbalkensäge schematisch dargestellt. Diese umfaßt ein Maschinengestell 4, das einen Auflagetisch 6 mit einem Sägespalt 8 ausbildet. Unterhalb der Auflagefläche des Auflagetisches 6 ist eine Bearbeitungseinheit in Form eines Sägewagens 10 entlang des Sägespaltes 8 linear verfahrbar am Maschinengestell 4 gehalten. Zum Verfahren und Positionieren des Sägewagens 10 kommt ein in der Zeichnung nicht dargestellter, an sich bekannter Antriebsmotor zum Einsatz, mit dessen Antriebswelle ein in eine Zahnstange 11 eingreifendes Ritzel (nicht in der Zeichnung dargestellt) drehfest verbunden ist. Der Sägewagen 10 trägt zwei Sägeeinheiten in Form einer Vorritzsäge 26 und einer Kreissäge 28, die jeweils ein an sich bekanntes und deshalb in der Zeichnung nicht dargestelltes Antriebsaggregat sowie ein Sägeblatt 12 bzw. 14 aufweisen, das mittels der zugeordneten Antriebsaggregate zur Vornahme eines Sägeschnittes zu einer Drehbewegung antreibbar ist. Die Sägeeinheiten 26, 28 sind in üblicher Weise in vertikaler Richtung verstellbar am Sägewagen 10 gehalten, so daß die zugeordneten Sägeblätter 12 bzw. 14 in einer oberen Stellung der Sägeeinheiten 26, 28 den Sägespalt 8 durchgreifen zur Vornahme eines Sägeschnittes, während sie in einer unteren Stellung der Sägeeinheiten 26, 28 unterhalb des Sägespaltes 8 angeordnet sind.

An einander gegenüberliegenden Stirnseiten trägt das Maschinengestell 4 jeweils einen Druckbalkenturm 16 bzw. 18, der jeweils eine Führungsanordnung 20, 22 aufnimmt. Mittels der Führungsanordnungen 20, 22 ist an den Druckbalkentürmen 16 und 18 eine Niederhaltevorrichtung in Form eines Druckbalkens 24 in zur Auflagefläche des Auflagetisches 6 senkrechter Richtung verstellbar gehalten. Der Druckbalken 24 weist in üblicher Weise ein ungefähr C-förmiges Profil auf mit einer dem Sägespalt 8 zugewandten schlitzförmigen Öffnung, in die bei der Vornahme eines Sägeschnittes die verstellbar am Sägewagen 10 gehaltenen Sägeblätter 12 und 14 eintreten können. Die Führungsanordnungen 20 und 22 der beiden Druckbalkentürme 16, 18 umfassen in üblicher und deshalb in der Zeichnung nicht näher dargestellter Weise druckmittelbeaufschlagbare Zylinder, mittels denen der Druckbalken 24 angehoben und abgesenkt werden kann.

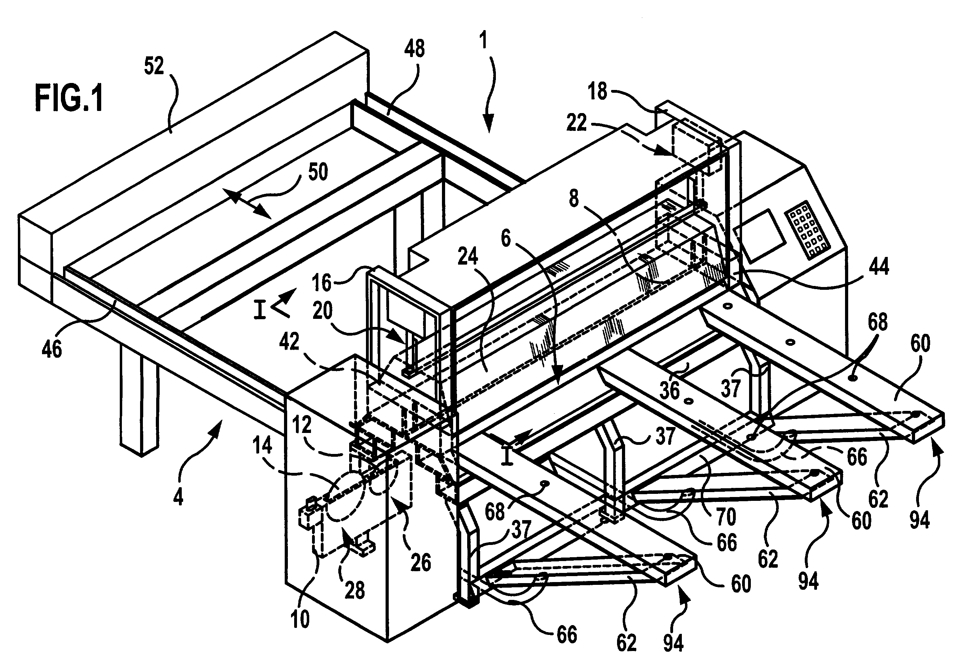

Die Druckbalkensäge 1 weist zwei parallel zueinander und senkrecht zum Sägespalt 8 ausgerichtete Führungsschienen 46, 48 auf, an denen eine Vorschubvorrichtung in Form eines Transportschlittens 52 verschiebbar gehalten ist, wobei der Transportschlitten 52 mittels eines an sich bekannten und deshalb in der Zeichnung nicht dargestellten Antriebes entlang der Führungsschienen 46, 48 in einer durch den Doppelpfeil 50 in Figur 1 veranschaulichten Vorschubrichtung definiert hin- und herbewegbar ist.

Die Auflagefläche des Auflagetisches 6 wird durch zwei Hohlprofile 30, 33 gebildet, zwischen denen der Sägespalt 8 verläuft. Jedes der Hohlprofile 30, 33 ist aus zwei L-förmig gebogenen Profilteilen 31, 32; 34, 35 gebildet und weist an zwei sich gegenüberliegenden Eckpunkten jeweils einen Überstand 86, 88 bzw. 90, 92 auf, der jeweils von einem Endbereich der parallel zueinander ausgerichteten längeren Schenkel der Profilteile 31, 32 bzw. 34, 35 ausgebildet wird.

Auf den Unterseiten der Hohlprofile 30 und 33 schließt sich jeweils ein U-förmiges Hohlträgerprofil 36 bzw. 38 an, das von den Stützfüßen 37 bzw. 39 des Maschinengestells 4 getragen wird.

An der Unterseite der L-förmig gebogenen Profilteile 32 und 35 ist jeweils eine parallel zum Sägespalt 8 verlaufende Führungsschiene 54 bzw. 56 angeordnet, über die der Sägewagen 10 mittels Führungsschlitten 58 verschiebbar am Maschiriengestell 4 gehalten ist.

Auf den längsseitigen Endbereichen der Auflagefläche des Auflagetisches 6 ist jeweils ein die Hohlprofile 30 und 33 starr miteinander verbindendes, die Druckbalkentürme 16 und 18 abstützendes Brückenelement 42, 44 angeordnet mit einem Schlitz 43 bzw. 45, durch den die Sägeblätter 12 und 14 bei der Vornahme eines Sägeschnittes hindurchtreten können.

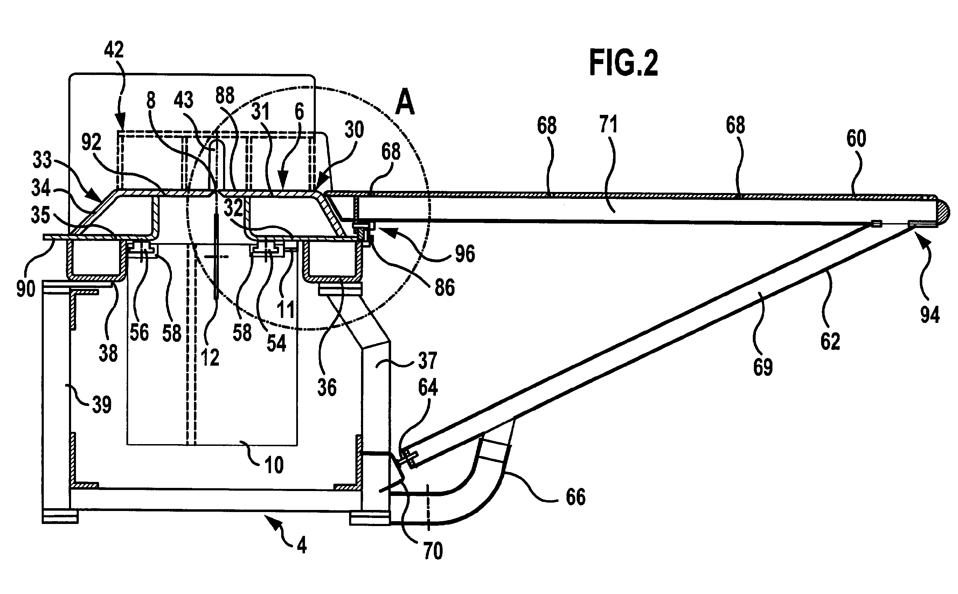

Am Maschinengestell 4 sind auf der dem Transportschlitten 52 abgewandten Vorderseite drei zueinander beabstandete Auflagevorrichtungen 94 verstellbar gehalten mit jeweils einer Auflageplatte 60, die sich über eine schräg zur Vertikalen ausgerichtete Diagonalstütze 62 und über eine auf der dem Maschinengestell zugewandten Querseite der Diagonalstütze 62 angeordnete Justierschraube 64 an einem an den Stützfüßen 37 angeordneten Querbalken 70 abstützt. Die Auflageplatten 60 und die sich in Richtung des Querbalkens 70 verjüngenden Diagonalstützen 62 sind hohl ausgestaltet und definieren jeweils einen in der Figur 2 dargestellten Luftkanal 69, 71, über den von einem zentralen Gebläse (in der Zeichnung nicht dargestellt), das mittels Schlauchleitungen 66 mit den Diagonalstützen 62 verbunden ist, eine Luftströmung zu auf der Oberseite der Auflageplatten 60 angeordneten Luftaustrittsdüsen 68 geführt werden kann. Auf die Auflageplatten 60, die sich lediglich am Maschinengestell 4, nicht aber auf einer Aufstandsfläche der Druckbalkensäge 1 abstützen, kann bearbeitetes Plattenmaterial aufgesetzt werden, wobei sich zwischen den Werkstücken und den Auflageplatten 60 durch die Luftzufuhr ein Luftpolster ausbilden läßt, so daß die Werkstücke mit geringem Kraftaufwand verschoben werden können.

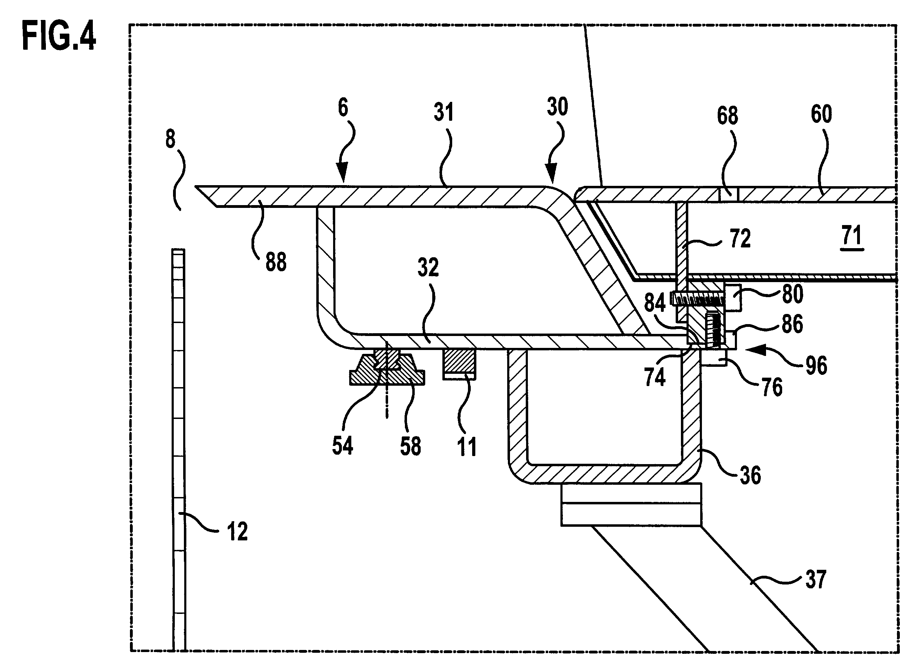

Die Anbindung der Auflageplatten 60 an das Maschinengestell 4 erfolgt über eine Linearführungsanordnung 96, die in Figur 4 vergrößert dargestellt ist. An einem parallel zum Sägespalt 8 verlaufenden, an der Unterseite der Auflageplatte 60 fixierten Träger 72 ist eine Leiste 74 mittels Schrauben 80 festgelegt. Die Leiste 74 greift in eine in die Oberseite des L-förmig gebogenen Profilteils 32 im Bereich ihres Überstandes 86 eingebrachte Nut 84 formschlüssig ein und ist durch Schrauben 76 am Überstand 86 fixiert.

## Patentansprüche

1. Vorrichtung zum Bearbeiten vorzugsweise plattenförmiger Werkstücke, insbesondere Plattenaufteilsäge, mit einem einen Auflagetisch für die Werkstücke ausbildenden Maschinengestell und mit einer in einer Bearbeitungsrichtung linear verfahrbaren Bearbeitungseinheit sowie mit mindestens einer Auflagevorrichtung mit einem seitlich vom Maschinengestell abstehenden Auflageelement zur Auflage eines Werkstückes und mit einem das Auflageelement abstützenden Stützelement, **dadurch gekennzeichnet, daß** das Auflageelement (60) in einem vom Maschinengestell (4) beabstandeten Bereich mittels des Stützelementes (62) am Maschinengestell (4) abgestützt ist.

2. Vorrichtung nach Anspruch 1, **dadurch gekennzeichnet, daß** das Stützelement (62) sich in Richtung des Maschinengestells (4) verjüngt.

3. Vorrichtung nach Anspruch 1 oder 2, **dadurch gekennzeichnet, daß** die Auflagevorrichtung (94) verstellbar gehalten ist.

4. Vorrichtung nach Anspruch 3, **dadurch gekennzeichnet, daß** das Auflageelement (60) über eine Linearführungsanordnung (96) verstellbar am Maschinengestell (4) gehalten ist.

5. Vorrichtung nach Anspruch 4, **dadurch gekennzeichnet, daß** am Maschinengestell (4) eine Führungsnut (84) angeordnet ist, an der das Auflageelement (60) mittels einer Leiste (74) verstellbar abgestützt ist.

6. Vorrichtung nach einem der voranstehenden Ansprüche, **dadurch gekennzeichnet, daß** das Maschinengestell (4) auf der der Auflagevorrichtung (94) zugewandten Seite einen Querträger (70) aufweist, an dem sich das Stützelement (62) abstützt.

7. Vorrichtung nach einem der voranstehenden Ansprüche, **dadurch gekennzeichnet, daß** die Vorrichtung (1) ein Feststellelement (76) zum Festlegen der Auflagevorrichtung (94) umfaßt.

8. Vorrichtung nach einem der voranstehenden Ansprüche, **dadurch gekennzeichnet, daß** das Auflageelement (60) einen Strömungskanal (61) umfaßt und daß das Auflageelement (60) im Bereich seiner Auflagefläche Bohrungen (68) für einen Luftdurchtritt aufweist.

9. Vorrichtung nach Anspruch 8, **dadurch gekennzeichnet, daß** das Stützelement (62) einen Strömungskanal für eine Luftzufuhr zum Auflageelement (60) ausbildet.

10. Vorrichtung nach einem der voranstehenden Ansprüche, **dadurch gekennzeichnet, daß** die Vorrichtung (1) eine Justiereinrichtung (64) für eine horizontale Ausrichtung des Auflageelementes (60) umfaßt.

11. Vorrichtung nach einem der voranstehenden Ansprüche, **dadurch gekennzeichnet, daß** der Auflagetisch (6) einen zur Bearbeitungsrichtung parallel verlaufenden Spalt (8) aufweist zum Durchtritt eines Bearbeitungswerkzeuges (12, 14).

12. Vorrichtung nach Anspruch 11, **dadurch gekennzeichnet, daß** das Maschinengestell (4) mindestens ein zum Spalt (8) parallel verlaufendes Hohlprofil (30, 33) umfaßt, welches wenigstens einen Teil einer Auflagefläche des Auflagetisches (6) ausbildet.

13. Vorrichtung nach Anspruch 11 oder 12, **dadurch gekennzeichnet, daß** wenigstens ein Teil der Auflagefläche des Auflagetisches (6) durch zwei in Längsrichtung zueinander parallel verlaufende, zwischen sich den Spalt (8) ausbildende Hohlprofile (30, 33) ausgebildet ist.

14. Vorrichtung nach Anspruch 12 oder 13, **dadurch gekennzeichnet, daß** das Hohlprofil (30, 33) zwei L-förmig gebogene Profilteile (31, 32, 34, 35) aufweist.

15. Vorrichtung nach Anspruch 14, **dadurch gekennzeichnet, daß** die L-förmig gebogenen Profilteile (31, 32, 34, 35) an zwei sich diagonal gegenüberliegenden Eckpunkten des Hohlprofils (30, 33) jeweils einen Überstand (86, 88, 90, 92) ausbilden, wobei sich die Überstände in entgegengesetzte Richtungen erstrecken.

16. Vorrichtung nach einem der Ansprüche 12 bis 15, **dadurch gekennzeichnet, daß** das Maschinengestell (4) mindestens ein zum Spalt (8) parallel verlaufendes Hohlträgerprofil umfaßt, welches sich an die zur Auflagefläche des Auflagetisches (6) abgewandte Unterseite des Hohlprofils (30, 33) anschließt.

17. Vorrichtung nach Anspruch 16, **dadurch gekennzeichnet, daß** das Hohlträgerprofil U-förmig ausgebildet ist.

18. Vorrichtung nach einem der Ansprüche 11 bis 17, **dadurch gekennzeichnet, daß** die Vorrichtung (1) mindestens ein den Spalt (8) überbrückendes Brückenelement (42, 44) umfaßt, welches die durch den Spalt (8) voneinander getrennten Auflagebereiche des Auflagetisches (6) starr miteinander verbindet.

19. Vorrichtung nach einem der Ansprüche 11 bis 18, **dadurch gekennzeichnet, daß** am Maschinengestell (4) zu beiden Seiten des Spalts (8) parallel zu diesem verlaufende Führungsanordnungen (54, 58; 56, 58) zur Führung der Bearbeitungseinheit (26, 28) angeordnet sind.

20. Vorrichtung nach Anspruch 19, **dadurch gekennzeichnet, daß** die Führungsanordnungen (54, 58; 56, 58) mindestens eine Prismenführung aufweisen.
